# EUROPÄISCHE PATENTSCHRIFT

(11) **EP 3 292 037 B1**
(45) Veröffentlichungstag und Bekanntmachung des Hinweises auf die Patenterteilung: **08.07.2020**
(21) Anmeldenummer: 16715308.9
(22) Anmeldetag: 08.04.2016
(51) Int. Cl.: B62D 25/20

(54) **ZWEISPURIGES FAHRZEUG**
TWO-TRACK VEHICLE
VÉHICULE À DEUX VOIES

(30) Priorität: 05.05.2015 DE 102015208312
(43) Veröffentlichungstag der Anmeldung: 14.03.2018
(73) Patentinhaber: Volkswagen Aktiengesellschaft, 38440 Wolfsburg (DE)
(72) Erfinder: DUPPER, Denis, 38518 Gifhorn (DE)
(74) Vertreter: Liebl, Thomas
(86) Internationale Anmeldenummer: PCT/EP2016/057779
(87) Internationale Veröffentlichungsnummer: WO 2016/177537

(56) Entgegenhaltungen:
- EP-A1- 2 805 877
- DE-A1- 10 149 022
- DE-A1- 10 149 023
- DE-A1-102011 114 800
- DE-T2- 69 808 340
- US-A1- 2013 153 317

## Beschreibung

Die Erfindung betrifft ein zweispuriges Fahrzeug nach dem Oberbegriff des Patentanspruches 1.

Bei einem Fahrzeug mit reinem Elektroantrieb oder mit einem Hybridantrieb (insbesondere mit einer Kombination aus einer Traktionsbatterie einerseits und einem Verbrennungsmotor oder einer Brennstoffzelle andererseits) kann die Traktionsbatterie als ein aufsetzempfindliches Bauteil am Unterboden des Fahrzeuges angeordnet sein. Die Traktionsbatterie ist in gängiger Praxis aus Batteriemodulen aufgebaut. In jedem dieser Batteriemodule sind einzelne Batteriezellen zu einem Zellenverbund zusammengefasst. Die Positionierung der Traktionsbatterie im Fahrzeug ist so auszulegen, dass im Crashfall oder bei Aufsetzern eine Beschädigung der Batteriezellen in der Traktionsbatterie erschwert oder zumindest weitgehend verhindert ist. Eine solche Beschädigung könnte nämlich gegebenenfalls zu einem schweren Schaden an der Traktionsbatterie führen.

Bei einer konkreten Einbausituation kann die Traktionsbatterie zum Beispiel unterhalb einer Rücksitzbank des Fahrzeuges angeordnet sein, wie es beispielhaft aus der DE 10 2012 012 897 A1 bekannt ist. Die Traktionsbatterie kann dabei mit einer Bauhöhe ausgelegt sein, bei der die Traktionsbatterie-Außenkontur von dem Unterboden der Karosserie-Bodengruppe in Richtung auf die Fahrbahn nach unten um ein Versatzmaß abragt und daher den tiefsten Punkt am Fahrzeug-Unterboden bilden, der bei Aufsetzern gefährdet ist. Ein solcher Aufsetzer ergibt sich beispielhaft bei einer Bordsteinüberfahrt, bei der der Bordstein eine Störkontur bildet, gegen die der Fahrzeug-Unterboden bei einer entsprechenden Nickbewegung des Fahrzeuges anschlagen kann. Zum Schutz vor Aufsetzern kann die Traktionsbatterie von einem Abdeckelement überdeckt sein.

Im Hinblick auf einen Schutz der bodenseitig montierten Traktionsbatterie vor Aufsetzern und/oder vor Crash-Ereignissen sind in gängiger Praxis eine Mehrzahl von Unterfahrschutz-Elementen (zum Beispiel Unterbodenverkleidungen und/oder Schutzbügel aus Stahl oder Titan) am Fahrzeug-Unterboden bereitgestellt, die insgesamt zu einem hohen Fahrzeuggewicht beitragen.

Aus der EP 2 805 877 A1 ist ein gattungsgemäßes Fahrzeug bekannt, das an seiner Unterseite ein aufsetzempfindliches Bauteil aufweist. Das aufsetzempfindliche Bauteil ist zum Schutz vor Aufsetzern bodenseitig mit einem Abdeckelement überdeckt. Aus der US 2013/153317 A1 ist ein weiteres Fahrzeug mit einem solchen Abdeckelement bekannt. Aus der DE 10 2011 114 800 A1 ist ein Kraftfahrzeug mit einem Unterbodenschutz bekannt.

Aus der DE 101 49 023 A1 ist allgemein eine Verkleidung für einen Unterboden bekannt, die zumindest ein plattenförmiges Element aufweist, in dem unterschiedliche Funktionen sowie Konturen integriert sind.

Als weiterer Stand der Technik sind in diesem Zusammenhang die EP 1 050 448 B1, die DE 10 2013 018 658 A1, die DE 101 49 022 A1 und die DE 10 2012 217 161 A1 bekannt.

Die Aufgabe der Erfindung besteht darin, ein zweispuriges Fahrzeug mit einem am Unterboden montierten aufsetzempfindlichen Bauteil, zum Beispiel einer Traktionsbatterie, bereitzustellen, das in einfacher sowie bauteilreduzierter Weise vor Aufsetzern geschützt ist.

Die Aufgabe ist durch die Merkmale des Patentanspruches 1 gelöst. Bevorzugte Weiterbildungen der Erfindung sind in den abhängigen Ansprüchen offenbart.

Gemäß dem kennzeichnenden Teil des Patentanspruches 1 ist ein, das aufsetzempfindliche Bauteil überdeckender Basisabschnitt eines Abdeckelementes in der Fahrzeugquerrichtung mit zumindest einem seitlichen Randabschnitt verlängert, der um einen vorgegebenen Seitenversatz das aufsetzempfindliche Bauteil überragt. Der Randabschnitt ist dabei als ein Aufsetzanschlag ausgebildet, der mit einem Höhenversatz von dem Basisabschnitt des Abdeckelementes in Richtung auf die Fahrbahn nach unten abragt. Der Aufsetzanschlag weist bevorzugt eine großflächige Anschlagfläche auf und bildet den tiefsten Punkt am Fahrzeug-Unterbau. Bei einem Aufsetzer stößt somit der Aufsetzanschlag des Abdeckelementes gegen die fahrbahnseitige Störkontur, während der Basisabschnitt des Abdeckelementes mit dem dahinter angeordneten aufsetzempfindlichen Bauteil (zum Beispiel einer Traktionsbatterie) außer Eingriff mit der fahrbahnseitigen Störkontur bleibt. Dadurch wird mittels des randseitig positionierten Aufsetzanschlages ein Lastpfad bereitgestellt, bei dem die von der fahrbahnseitigen Störkontur eingebrachte Stoßenergie am aufsetzempfindlichen Bauteil vorbeigeleitet wird.

In einer technischen Ausführung kann die Karosserie-Bodengruppe ein Bodenblechteil aufweisen, das sich in der Fahrzeugquerrichtung zwischen seitlichen Türschwellern erstreckt. In der Fahrzeuglängsrichtung nach hinten kann das Bodenblechteil an einem hochkant aufgestellten Fersenblechteil stufenartig in ein Fondblechteil übergehen. Auf dem Fondblechteil sind die Fondsitze des Fahrzeugs (zum Beispiel eine Rücksitzbank) montiert. Durch den stufenartigen Übergang in das Fondblechteil ergibt sich am Unterboden ein Bauraum für das aufsetzempfindliche Bauteil.

Nachfolgend werden weitere Aspekte der Erfindung speziell anhand eines Fahrzeuges mit reinem Elektroantrieb oder mit teilweisem Elektroantrieb (das heißt einem Hybridantrieb) beschrieben, bei dem das aufsetzempfindliche Bauteil eine Traktionsbatterie ist. Es versteht sich jedoch, dass die Erfindung keinesfalls alleine auf die Ausgestaltung des aufsetzempfindlichen Bauteils als Traktionsbatterie beschränkt ist.

So kann jeder Türschweller der Karosserie-Bodengruppe in der Fahrzeuglängsrichtung nach hinten an einem Stirnblechteil abschließen, das Bestandteil eines Hinterrad-Radhauses ist. Das Stirnblechteil des Radhauses, der Türschweller und das Bodenblechteil laufen an einer gemeinsamen Innenecke zusammen. Der dazwischen ausgebildete Inneneckbereich ist bei einer Bordsteinüberfahrt der Fahrzeug-Hinterräder bei einem Aufsetzer besonders gefährdet, der aus einer Nickbewegung des Fahrzeug-Hinterwagens resultiert. Vor diesem Hintergrund kann bevorzugt der Aufsetzanschlag des Abdeckelements in dem Inneneckbereich zwischen dem Türschweller und dem Stirnblechteil angeordnet sein, um die Traktionsbatterie speziell bei Aufsetzern bei einer Bordsteinüberfahrt der Fahrzeug-Hinterräder zu schützen, bei der die Heckseite des Fahrzeuges unter Ausführung einer Nickbewegung gegen die Bordsteinkante schlagen kann.

In einer weiteren Ausführungsvariante kann der in der Fahrzeughochrichtung in Flucht unterhalb der Traktionsbatterie positionierte Abdeckelement-Basisabschnitt mit weiteren Zusatzfunktionen versehen sein. Beispielhaft kann der Abdeckelement-Basisabschnitt in der Fahrzeuglängsrichtung nach vorne mit einer Auffahrrampe verlängert sein, die in der Fahrzeuglängsrichtung nach vorne keilförmig in Richtung auf die Fahrzeug-Unterseite bis zu einem vorderen Querrand zuläuft. Auf diese Weise ist verhindert, dass eine fahrbahnseitige Störkontur stumpf gegen die von der Unterseite der Karosserie-Bodengruppe nach unten abragende Außenkontur der Traktionsbatterie schlägt. In gleicher Weise kann der Abdeckelement-Basisabschnitt in der Fahrzeug-Längsrichtung betrachtet nach hinten mit einer Auffahrrampe verlängert sein. Diese kann in der Fahrzeug-Längsrichtung nach hinten keilförmig in Richtung auf die Fahrzeug-Unterseite bis zu einem hinteren Querrand zulaufen.

Der seitliche Aufsetzanschlag und/oder die frontseitige und/oder die heckseitige Auffahrrampe können im Hinblick auf eine Bauteilreduzierung materialeinheitlich und/oder einstückig mit dem Basisabschnitt des Abdeckelementes unter Bildung einer Vormontageeinheit verbunden sein.

Diese Vormontageeinheit kann im Hinblick auf eine Reduzierung des Bauteilgewichts bevorzugt als ein Faserverbund-Kunststoffbauteil hergestellt sein, bei dem Verstärkungsfasern in einer Kunststoffmatrix eingebettet sind. Zur weiteren Reduzierung des Bauteilgewichts sowie zur Steifigkeits-Erhöhung des Abdeckelementes kann das Abdeckelement an seiner, der Fahrbahn abgewandten Oberseite eine fachwerkartige Versteifungsstruktur mit Quer- und Längsstreben aufweisen. Demgegenüber ist die, der Fahrbahn zugewandte Oberseite bevorzugt zumindest weitgehend glattflächig ausgebildet.

Zur weiteren Reduzierung des Materialaufwands bzw. des Bauteilgewichtes kann die Abdeckelement-Geometrie weiter angepasst werden: So kann sich bevorzugt die Auffahrrampe in der Fahrzeugquerrichtung betrachtet im Wesentlichen nur über die Breite der Traktionsbatterie erstrecken, während im weiteren Verlauf nach fahrzeugaußen auf die Auffahrrampe verzichtet wird. Vor diesem Hintergrund kann der fahrzeugäußere Aufsetzanschlag in der Fahrzeuglängsrichtung betrachtet um einen Längsversatz hinter dem vorderen Querrand der Auffahrrampe versetzt angeordnet sein. Zudem kann die Auffahrrampe gegenüber einem fahrzeugäußeren Längsrand des Aufsetzanschlages um einen Seitenversatz nach fahrzeuginnen versetzt sein, und zwar unter Bildung eines ausgesparten Außeneckbereiches im Abdeckelement.

Wie oben erwähnt, kann das Fahrzeug einen Hybridantrieb aufweisen, und zwar mit einer Elektromaschine und einer Brennkraftmaschine oder einer Brennstoffzelle. Die Abgasanlage der Brennkraftmaschine kann vom Vorderwagenbereich des Fahrzeuges durch einen entlang einer Fahrzeug-Mittellängsachse verlaufenden Mitteltunnel in Richtung auf das Fahrzeugheck geführt werden. Der Mitteltunnel ist in der Karosserie-Bodengruppe integriert. In einem solchen Fall erstreckt sich der Mitteltunnel bis zum oben erwähnten hochkant aufgestellten Fersenblechteil im Fondbereich des Fahrzeugs. Der Mitteltunnel kann dann im weiteren Verlauf nach hinten in eine Längsgasse der Traktionsbatterie übergehen, in der sich die Abgasanlage bis zum Fahrzeugheck erstreckt.

In dieser speziellen Ausführungsvariante des Fahrzeuges mit einem Hybridantrieb kann das Abdeckelement in zwei voneinander getrennte Segmente aufgeteilt sein. Diese sind mit Bezug auf die Fahrzeug-Mittellängsachse spiegelbildlich ausgeführt und über einen Längs-Freiraum voneinander beabstandet. Dieser ist in Flucht mit der oben erwähnten Traktionsbatterie-Längsgasse ausgerichtet, um eine ausreichende Wärmeabfuhr von der Abgasanlage der Brennkraftmaschine zu gewährleisten.

Die vorstehend erläuterten und/oder in den abhängigen Ansprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Seitenansicht mit teilweisem Aufriss ein Fahrzeug mit einem nicht näher gezeigten Hybridantrieb;
- Fig. 2: eine teilweise perspektivische Unteransicht auf ein Abdeckelement zur Abdeckung einer Traktionsbatterie;
- Fig. 3: eine vergrößerte Teilschnittdarstellung entlang der Schnittebene A-A aus der Fig. 2;
- Fig. 4: eine Schnittdarstellung entlang der Schnittebene B-B aus der Fig. 2;
- Fig. 5: ein Segment des Abdeckelementes in einer perspektivischen Darstellung sowie in Alleinstellung; und
- Fig. 6: eine weitere Teilansicht von unten auf die Fahrzeug-Unterseite.

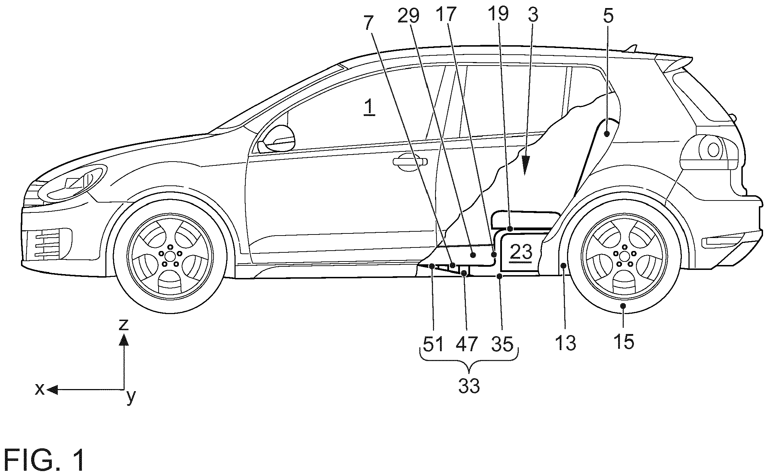

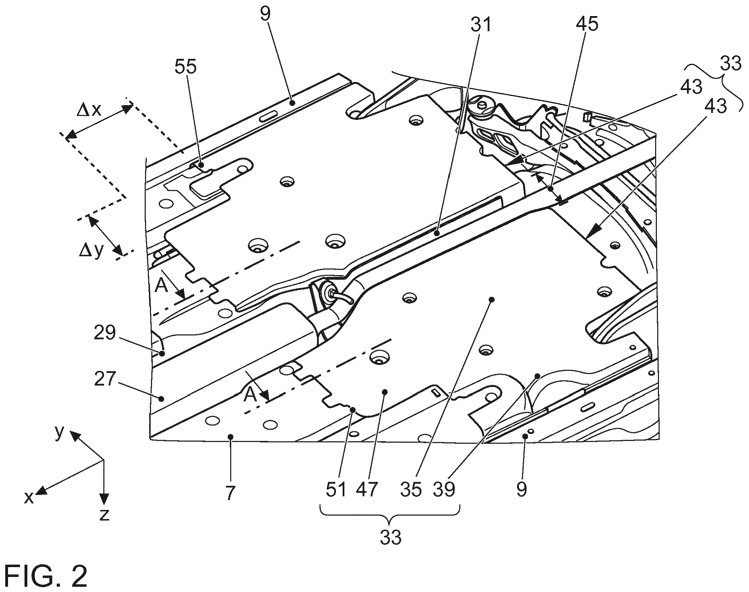

In der Fig. 1 ist ein zweispuriges Fahrzeug in einer Seitenansicht dargestellt. Das Fahrzeug weist einen Innenraum 1 mit einem Frontbereich sowie einem Fondbereich 3 mit einer angedeuteten Rücksitzbank 5 auf. Die Rücksitzbank 5 ist auf einer in der Fig. 1 im Aufriss teilweise ersichtlichen Karosserie-Bodengruppe getragen. Die Karosserie-Bodengruppe ist in der Fig. 1 nur insoweit dargestellt, als es für das Verständnis der Erfindung erforderlich ist. Von daher zeigt die Fig. 1 wie auch die weiteren Fig. 2 bis 6 lediglich grob vereinfachte Darstellungen, die keinen realitätsgetreuen Aufbau der Karosserie-Bodengruppe des Fahrzeuges wiedergeben.

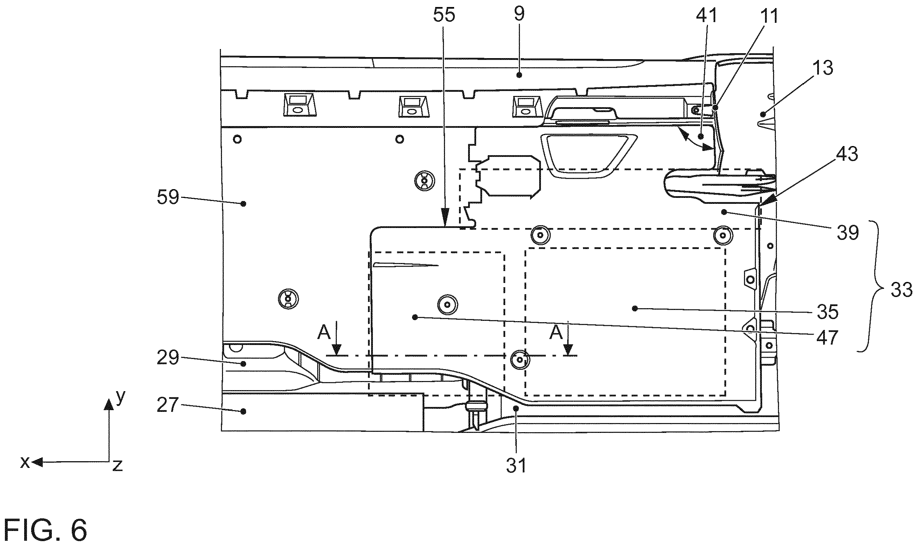

In der Fig. 1 weist die Karosserie-Bodengruppe ein Bodenblechteil 7 auf, das sich in der Fig. 2 in der Fahrzeugquerrichtung y zwischen seitlichen Türschwellern 9 erstreckt. Jeder der seitlichen Türschweller 9 schließt in der Fahrzeuglängsrichtung x nach hinten an einem hochkant aufgestellten Stirnblechteil 11 (Fig. 6) ab. Das Stirnblechteil 11 ist ein Bestandteil eines Hinterrad-Radhauses 13, in dem das Fahrzeug-Hinterrad 15 läuft. Das Stirnblechteil 11 des Radhauses 13, der Türschweller 9 und das Bodenblechteil 7 laufen an einer gemeinsamen Innenecke zusammen. Der dazwischen ausgebildete Inneneckbereich 41 (Fig. 6) ist bei einer Bordsteinüberfahrt der Fahrzeug-Hinterräder 15 besonders gefährdet bei einem Aufsetzer, der aus einer Nickbewegung des Fahrzeug-Hinterwagens resultiert.

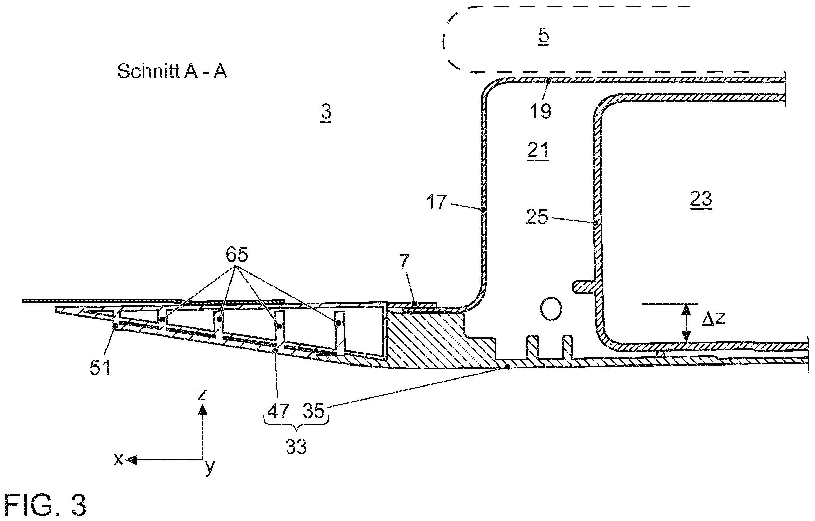

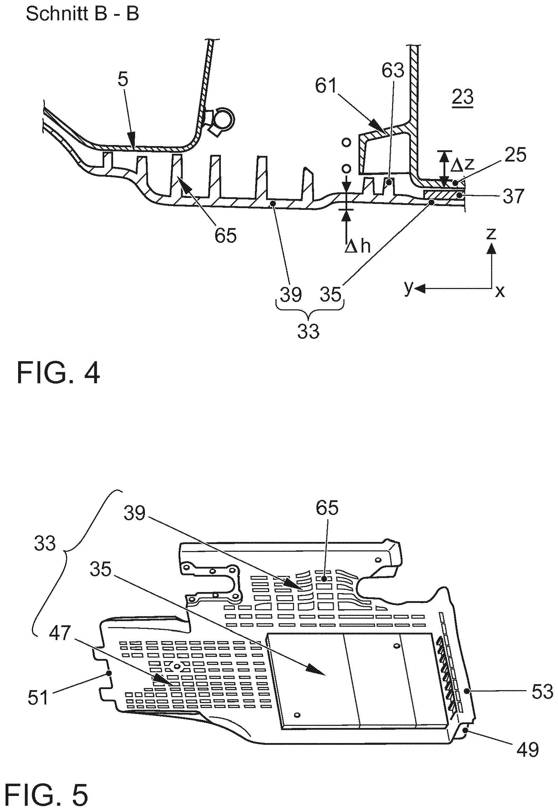

Gemäß der Fig. 1 oder der Fig. 3 geht das Bodenblechteil 7 in der Fahrzeuglängsrichtung x nach hinten an einem hochkant aufgestellten Fersenblechteil 17 stufenartig in ein oberes horizontales Fondblechteil 19 über. Auf dem Fondblechteil 19 ist die Rücksitzbank 5 montiert. Durch den stufenartigen Übergang zum Fondblechteil 19 ergibt sich an der Fahrzeug-Unterseite ein nach unten offener Bauraum 21 für eine Traktionsbatterie 23 eines nicht gezeigten Elektroantriebes des Fahrzeugs. Die Traktionsbatterie 23 weist ein aus einer Unterschale und einer Oberschale zusammengesetztes Batteriegehäuse 25 auf. Dessen bodenseitige Außenkontur ist in der Fig. 3 nicht gegenüber dem Bodenblechteil 7 nach oben zurückgesetzt, sondern überragt vielmehr die Unterseite der Karosserie-Bodengruppe um ein Versatzmaß Δz in Richtung auf die Fahrbahn nach unten (Fig. 3 oder 4).

Der Hybridantrieb des Fahrzeugs umfasst zudem eine nicht gezeigte Brennkraftmaschine im Vorderwagenbereich, deren Abgasanlage 27 in einem, entlang einer Fahrzeug-Mittellängsachse verlaufenden Mitteltunnel 29 in Richtung auf die Fahrzeugheckseite geführt ist. Der Mitteltunnel 29 erstreckt sich bis zum hochkant aufgestellten Fersenblechteil 17 und mündet dort in den Bauraum 21 für die Traktionsbatterie 23. In Verlängerung des Mitteltunnels 29 weist die Traktionsbatterie 23 eine Längsgasse 31 auf, durch die die Abgasanlage 27 der Brennkraftmaschine bis zum Fahrzeugheck geführt ist, und zwar unter Zwischenlage eines nicht dargestellten Wärmeschutzschildes zwischen der Abgasanlage 27 und der Traktionsbatterie 23.

Zum Schutz vor Aufsetzern im Fahrbetrieb ist die nach unten abragende Außenkontur der Traktionsbatterie 23 mit einem Abdeckelement 33 überdeckt. Das Abdeckelement 33 ist exemplarisch ein Faserverbund-Kunststoffbauteil. Dessen großflächiger Basisabschnitt 35 ist in der Hochrichtung z betrachtet in Flucht unterhalb der Traktionsbatterie 23 positioniert, und zwar unter Zwischenlage eines Schaumelementes 37 (Fig. 4), das unter Verformung die Aufprallenergie bei einem Aufsetzer abbauen kann.

Der Abdeckelement-Basisabschnitt 35 ist in der Fahrzeugquerrichtung y nach fahrzeugaußen mit einem großflächigen Aufsetzanschlag 39 seitlich verlängert. Der Aufsetzanschlag 39 ragt in der Fig. 4 um einen Höhenversatz Δh vom ebenflächigen Abdeckelement-Basisabschnitt 33 in Richtung auf die Fahrbahn nach unten vor. Bei einem Aufsetzer schlägt daher eine fahrbahnseitige Störkontur nicht unmittelbar auf den Abdeckelement-Basisabschnitt 35, sondern vielmehr unter Bildung eines Lastpfades gegen den seitlich versetzten Aufsetzanschlag 39. Der Abdeckelement-Basisabschnitt 33 bleibt daher außer Eingriff mit der fahrbahnseitigen Störkontur.

Wie aus der Fig. 6 hervorgeht, ist der Aufsetzanschlag 39 des Abdeckelementes 33 bis in den Inneneckbereich 41 seitlich nach fahrzeugaußen geführt, der zwischen dem Türschweller 9 und dem hochkant aufgestellten Stirnblechteil 11 des Hinterrad-Radhauses 13 aufgespannt ist. Auf diese Weise kann die Stoßenergie bei einem Aufsetzer, der aus einer Nickbewegung bei der Bordsteinüberfahrt der Hinterräder 15 resultiert, in die Karosserie-Bodenstruktur eingeleitet werden, ohne die Traktionsbatterie 23 zu beschädigen.

Wie aus den Figuren weiter hervorgeht, ist das Abdeckelement 33 in zwei voneinander getrennte Segmente 43 aufgeteilt, die mit Bezug auf die Fahrzeug-Mittellängsachse spiegelbildlich ausgeführt sind. Die beiden Segmente 43 sind über einen Längs-Freiraum 45 voneinander beabstandet. Dieser ist wiederum in Flucht mit der Batterie-Längsgasse 31 positioniert, um während des Fahrbetriebs eine Wärmeabfuhr von der Abgasanlage 27 zu gewährleisten.

Zudem ist der Abdeckelement-Basisabschnitt 35 in der Fahrzeuglängsrichtung x nach vorne und nach hinten jeweils mit einer Auffahrrampe 47, 49 verlängert. Die beiden Auffahrrampen 47, 49 laufen jeweils in der Fahrzeuglängsrichtung x nach vorne bzw. hinten keilförmig in Richtung auf die Fahrzeug-Unterseite zu, und zwar jeweils bis zu einem vorderen Querrand 51 bzw. zu einem hinteren Querrand 53 sowie mit unterschiedlichen Keilwinkeln.

Gemäß der Fig. 2 oder 6 ist an den vorderen Außeneckbereichen 55 der beiden Abdeckelement-Segmente 43 jeweils eine Eckaussparung gebildet, um den Materialaufwand bei der Herstellung der beiden Abdeckelement-Segmente 43 zu reduzieren. Das heißt, dass der Aufsetzanschlag 39 in der Fahrzeuglängsrichtung x betrachtet um einen Längsversatz Δx hinter dem vorderen Querrand 51 der vorderen Auffahrrampe 47 angeordnet ist. Zudem ist die vordere Auffahrrampe 47 gegenüber einem fahrzeugäußeren Längsrand 57 des Aufsetzanschlages 39 um einen Querversatz Δy nach fahrzeuginnen versetzt, um die oben erwähnten Außenecken 55 mit der Materialaussparung zu bilden.

Die beiden Abdeckelement-Segmente 43 sind gemäß der Fig. 6 in der Fahrzeuglängsrichtung x nach vorne mit einer herkömmlichen Unterbodenverkleidung 59 verlängert. Hierzu sind entsprechende Anschlusskonturen sowohl an der Unterbodenverkleidung 59 als auch an den Abdeckelement-Segmenten 43 vorgesehen, um einen flächenbündigen Übergang zu gewährleisten.

## Patentansprüche

1. Zweispuriges Fahrzeug mit einer Karosserie-Bodengruppe, an deren Unterseite ein aufsetzempfindliches Bauteil (23) angeordnet ist, dessen Außenkontur um ein Versatzmaß (Δz) von der Unterseite der Karosserie-Bodengruppe in Richtung auf die Fahrbahn nach unten abragt, wobei das Bauteil (23) zum Schutz vor Aufsetzern bodenseitig von einem Basisabschnitt (35) eines Abdeckelements (33) überdeckt ist, **dadurch gekennzeichnet, dass** der Basisabschnitt (35) des Abdeckelements (33) in einer Fahrzeugquerrichtung (y) mit zumindest einem Randabschnitt seitlich verlängert ist, der einen Aufsetzanschlag (39) bildet, der mit einem Höhenversatz (Δh) von dem Abdeckelement-Basisabschnitt (35) in Richtung auf die Fahrbahn nach unten abragt, so dass bei einem Aufsetzer der Abdeckelement-Basisabschnitt (35) im Wesentlichen außer Eingriff mit einer fahrbahnseitigen Störkontur bleibt.

2. Zweispuriges Fahrzeug nach Anspruch 1, **dadurch gekennzeichnet, dass** die Karosserie-Bodengruppe ein Bodenblechteil (7) aufweist, das sich in der Fahrzeugquerrichtung (y) zwischen seitlichen Türschwellern (9) erstreckt und in der Fahrzeuglängsrichtung (x) nach hinten an einem Fersenblechteil (17) stufenartig in ein Fondblechteil (19) übergeht, das Fondsitze (5) des Fahrzeugs trägt, und zwar unter Bildung eines unterseitigen Bauraums (21) für das Bauteil (23).

3. Zweispuriges Fahrzeug nach Anspruch 1, **dadurch gekennzeichnet, dass** jeder der Türschweller (9) der Karosserie-Bodengruppe in der Fahrzeuglängsrichtung (x) nach hinten an einem Stirnblechteil (11) abschließt, das Bestandteil eines Hinterrad-Radhauses (13) ist, und dass zwischen dem Türschweller (9) und dem Stirnblechteil (11) ein Inneneckbereich (41) aufgespannt ist, in dem der Aufsetzanschlag (39) des Abdeckelements (33) angeordnet ist.

4. Zweispuriges Fahrzeug nach Anspruch 1, **dadurch gekennzeichnet, dass** der Abdeckelement-Basisabschnitt (35) in der Fahrzeuglängsrichtung (x) nach vorne mit einer Auffahrrampe (47) verlängert ist, die in der Fahrzeuglängsrichtung (x) nach vorne keilförmig in Richtung auf die Fahrzeug-Unterseite bis zu einem vorderen Querrand (51) zuläuft.

5. Zweispuriges Fahrzeug nach Anspruch 4, **dadurch gekennzeichnet, dass** der Aufsetzanschlag (39) in der Fahrzeuglängsrichtung (x) um einen Längsversatz (Δx) hinter dem vorderen Querrand (51) der Auffahrrampe (47) versetzt ist.

6. Zweispuriges Fahrzeug nach Anspruch 4, **dadurch gekennzeichnet, dass** die Auffahrrampe (47) gegenüber einem fahrzeugäußeren Längsrand (57) des Aufsetzanschlags (39) um einen Querversatz (Δy) nach fahrzeuginnen versetzt ist.

7. Zweispuriges Fahrzeug nach Anspruch 1, **dadurch gekennzeichnet, dass** der Aufsetzanschlag (39) und der Basisabschnitt (35) des Abdeckelements (33) materialeinheitlich und/oder einstückig ausgebildet sind.

8. Zweispuriges Fahrzeug nach Anspruch 1, **dadurch gekennzeichnet, dass** das aufsetzempfindliche Bauteil (23) eine Traktionsbatterie eines Elektroantriebs des Fahrzeugs ist.

9. Zweispuriges Fahrzeug nach Anspruch 8, **dadurch gekennzeichnet, dass** das Batteriegehäuse (35) der Traktionsbatterie (23) zumindest einen seitlich nach außen abragenden Versteifungssteg (61) aufweist, und dass das Abdeckelement (33) an seiner von der Fahrbahn abgewandten Oberseite eine Stützkontur (63) aufweist, die zumindest bei einem Aufsetzer unter Bildung eines Lastpfads in Anlageverbindung mit dem Versteifungssteg (61) des Batteriegehäuses (25) ist.

10. Zweispuriges Fahrzeug nach Anspruch 8, **dadurch gekennzeichnet, dass** die Karosserie-Bodengruppe einen entlang einer Fahrzeug-Mittellängsachse verlaufenden Mitteltunnel (29) aufweist, durch den sich eine Abgasanlage (27) einer Brennkraftmaschine in Richtung auf das Fahrzeugheck erstreckt, und dass die Traktionsbatterie (23) in Verlängerung des Mitteltunnels (29) nach hinten eine Längsgasse (31) aufweist, in der sich die Abgasanlage (27) bis zum Fahrzeugheck erstreckt.

11. Zweispuriges Fahrzeug nach Anspruch 10, **dadurch gekennzeichnet, dass** das Abdeckelement (33) in zwei Segmente (43) aufgeteilt ist, die mit Bezug auf die Fahrzeug-Mittellängsachse spiegelbildlich ausgebildet sind und über einen Längs-Freiraum (45) voneinander beabstandet sind, der in Flucht mit der Batterie-Längsgasse (31) positioniert ist.

12. Zweispuriges Fahrzeug nach Anspruch 1, **dadurch gekennzeichnet, dass** der Abdeckelement-Basisabschnitt (35) in der Fahrzeuglängsrichtung (x) nach hinten mit einer Auffahrrampe (49) verlängert ist, die in der Fahrzeuglängsrichtung (x) nach hinten keilförmig in Richtung auf die Fahrzeug-Unterseite bis zu einem hinteren Querrand (53) zuläuft.

13. Zweispuriges Fahrzeug nach Anspruch 1, **dadurch gekennzeichnet, dass** das Abdeckelement (33) an seiner der Fahrbahn abgewandten Oberseite eine Fachwerkstruktur (65) aufweist.

## Claims

1. Two-track vehicle comprising a body-floor assembly, a component (23) which is sensitive to scraping the road surface being arranged on the lower face thereof, the outer contour of said component protruding downwardly from the lower face of the body-floor assembly in the direction of the road surface by an offset (Δz), wherein the component (23) is covered by a base portion (35) of a cover element (33) on the floor side in order to protect it from scraping the road surface, **characterized in that** the base portion (35) of the cover element (33) is laterally extended in a vehicle transverse direction (y) by at least one edge portion which forms a scraper stop (39) which protrudes downwardly from the cover element base portion (35) in the direction of the road surface by a vertical offset (Δh), so that when the lower face of the vehicle scrapes the road surface the cover element base portion (35) remains substantially out of contact with an interference contour on the road surface side.

2. Two-track vehicle according to Claim 1, **characterized in that** the body-floor assembly comprises a floor plate part (7) which extends in the vehicle transverse direction (y) between lateral door sills (9) and, in the vehicle longitudinal direction (x) to the rear, transitions in a stepped manner at a heel plate part (17) into a rear plate part (19) which bears the rear seats (5) of the vehicle and namely forming a constructional space (21) for the component (23) on the lower face.

3. Two-track vehicle according to Claim 1, **characterized in that** each of the door sills (9) of the body-floor assembly in the vehicle longitudinal direction (x) terminates at the rear at a front plate part (11) which is a component of a rear wheel housing (13), and **in that** an internal corner region (41) is spanned between the door sill (9) and the front plate part (11), the scraper stop (39) of the cover element (33) being arranged in said internal corner region.

4. Two-track vehicle according to Claim 1, **characterized in that** in the vehicle longitudinal direction (x) the cover element base portion (35) is extended to the front by a ramp (47) which runs in a wedge-shaped manner to the front in the vehicle longitudinal direction (x) as far as a front transverse edge (51) in the direction of the vehicle lower face.

5. Two-track vehicle according to Claim 4, **characterized in that** in the vehicle longitudinal direction (x) the scraper stop (39) is offset by a longitudinal offset (Δx) to the rear of the front transverse edge (51) of the ramp (47).

6. Two-track vehicle according to Claim 4, **characterized in that** relative to a longitudinal edge (57) of the scraper stop (39) on the vehicle exterior, the ramp (47) is offset by a transverse offset (Δy) toward the vehicle interior.

7. Two-track vehicle according to Claim 1, **characterized in that** the scraper stop (39) and the base portion (35) of the cover element (33) are configured in the same material and/or integrally.

8. Two-track vehicle according to Claim 1, **characterized in that** the component (23) which is sensitive to scraping the road surface is a traction battery of an electric drive of the vehicle.

9. Two-track vehicle according to Claim 8, **characterized in that** the battery housing (35) of the traction battery (23) has at least one reinforcing web (61) protruding laterally outwardly, and **in that** the cover element (33) on its upper face remote from the road surface has a supporting contour (63) which, at least when the lower face of the vehicle scrapes the road surface, comes to bear against the reinforcing web (61) of the battery housing (25), forming a load path.

10. Two-track vehicle according to Claim 8, **characterized in that** the body-floor assembly comprises a central tunnel (29) extending along a vehicle central longitudinal axis, an exhaust gas system (27) of an internal combustion engine extending through said central tunnel in the direction of the vehicle rear, and **in that** the traction battery (23) in the extension of the central tunnel (29) has a longitudinal channel (31) to the rear in which the exhaust gas system (27) extends as far as the vehicle rear.

11. Two-track vehicle according to Claim 10, **characterized in that** the cover element (33) is divided into two segments (43) which are configured mirror-symmetrically relative to the vehicle central axis and which are spaced apart from one another via a longitudinal free space (45) which is positioned in alignment with the battery longitudinal channel (31).

12. Two-track vehicle according to Claim 1, **characterized in that** in the vehicle longitudinal direction (x) the cover element base portion (35) is extended to the rear by a ramp (49) which runs in a wedge-shaped manner to the rear in the vehicle longitudinal direction (x) as far as a rear transverse edge (53) in the direction of the vehicle lower face.

13. Two-track vehicle according to Claim 1, **characterized in that** the cover element (33) has a frame structure (65) on its upper face remote from the road surface.

## Revendications

1. Véhicule à deux voies comprenant un groupe de plancher de carrosserie au niveau du côté inférieur duquel est disposé un composant sensible aux chocs (23), dont le contour extérieur dépasse vers le bas dans la direction de la chaussée d'une mesure de décalage (Δz) au-delà du côté inférieur du groupe de plancher de carrosserie, le composant (23), pour protéger contre les chocs, étant recouvert du côté du fond par une portion de base (35) d'un élément de recouvrement (33),
**caractérisé en ce que** la portion de base (35) de l'élément de recouvrement (33) est prolongée latéralement dans une direction transversale du véhicule (y) par au moins une portion de bord, qui forme une butée contre les chocs (39), qui dépasse vers le bas dans la direction de la chaussée avec un décalage en hauteur (Δh) au-delà de la portion de base (35) de l'élément de recouvrement, de telle sorte que dans le cas d'un choc, la portion de base (35) de l'élément de recouvrement reste essentiellement sans contact avec un contour gênant du côté de la chaussée.

2. Véhicule à deux voies selon la revendication 1, **caractérisé en ce que** le groupe de plancher de carrosserie présente une partie de tôle de plancher (7) qui s'étend dans la direction transversale du véhicule (y) entre des seuils de portières latéraux (9) et qui se prolonge, dans la direction longitudinale du véhicule (x) vers l'arrière au niveau d'une partie de tôle de talon (17), de manière échelonnée par une partie de tôle de fond (19) qui porte des sièges arrière (5) du véhicule, et ce en formant un espace d'installation du côté inférieur (21) pour le composant (23).

3. Véhicule à deux voies selon la revendication 1, **caractérisé en ce que** chacun des seuils de portières (9) du groupe de plancher de carrosserie se termine, vers l'arrière dans la direction longitudinale du véhicule (x), au niveau d'une partie de tôle frontale (11) qui fait partie d'un logement de roue arrière (13) et **en ce qu'**entre le seuil de portière (9) et la partie de tôle frontale (11) s'étend une région de coin intérieure (41) dans laquelle est disposée la butée contre les chocs (39) de l'élément de recouvrement (33).

4. Véhicule à deux voies selon la revendication 1, **caractérisé en ce que** la portion de base (35) de l'élément de recouvrement, est prolongée vers l'avant dans la direction longitudinale du véhicule (x) par une rampe de montée (47) qui se termine vers l'avant dans la direction longitudinale du véhicule (x) en forme de cale dans la direction du côté inférieur du véhicule jusqu'à un bord transversal avant (51).

5. Véhicule à deux voies selon la revendication 4, **caractérisé en ce que** la butée contre les chocs (39) est décalée dans la direction longitudinale du véhicule (x) d'un décalage longitudinal (Δx) derrière le bord transversal avant (51) de la rampe de montée (47).

6. Véhicule à deux voies selon la revendication 4, **caractérisé en ce que** la rampe de montée (47) est décalée d'un décalage transversal (Δy) vers l'intérieur du véhicule par rapport à un bord longitudinal (57) extérieur au véhicule de la butée contre les chocs (39).

7. Véhicule à deux voies selon la revendication 1, **caractérisé en ce que** la butée contre les chocs (39) et la portion de base (35) de l'élément de recouvrement (33) sont réalisées dans le même matériau et/ou d'une seule pièce.

8. Véhicule à deux voies selon la revendication 1, **caractérisé en ce que** le composant sensible aux chocs (23) est une batterie de traction d'un entraînement électrique du véhicule.

9. Véhicule à deux voies selon la revendication 8, **caractérisé en ce que** le logement de batterie (35) de la batterie de traction (23) présente au moins une nervure de renforcement (61) faisant saillie latéralement vers l'extérieur et **en ce que** l'élément de recouvrement (33) présente, au niveau de son côté supérieur détourné de la chaussée, un contour de support (63) qui, au moins dans le cas d'un choc, est en liaison d'appui, en formant un chemin de charge, avec la nervure de renforcement (61) du logement de batterie (25).

10. Véhicule à deux voies selon la revendication 8, **caractérisé en ce que** le groupe de plancher de carrosserie présente un tunnel central (29) s'étendant le long d'un axe longitudinal médian du véhicule, à travers lequel s'étend une installation de gaz d'échappement (27) d'un moteur à combustion interne dans la direction de l'arrière du véhicule, et **en ce que** la batterie de traction (23) présente, dans le prolongement du tunnel central (29) vers l'arrière, une voie longitudinale (31) dans laquelle s'étend l'installation de gaz d'échappement (27) jusqu'à l'arrière du véhicule.

11. Véhicule à deux voies selon la revendication 10, **caractérisé en ce que** l'élément de recouvrement (33) est divisé en deux segments (43) qui sont réalisés avec une symétrie spéculaire par rapport à l'axe longitudinal médian du véhicule, et qui sont espacés l'un de l'autre par le biais d'un espace libre longitudinal (45) qui est positionné en alignement avec la voie longitudinale de la batterie (31).

12. Véhicule à deux voies selon la revendication 1, **caractérisé en ce que** la portion de base (35) de l'élément de recouvrement est prolongée dans la direction longitudinale du véhicule (x) vers l'arrière par une rampe de montée (49) qui se termine dans la direction longitudinale du véhicule (x) vers l'arrière en forme de cale dans la direction du côté inférieur du véhicule jusqu'à un bord transversal arrière (53).

13. Véhicule à deux voies selon la revendication 1, **caractérisé en ce que** l'élément de recouvrement (33) présente une structure en treillis (65) au niveau de son côté supérieur détourné de la chaussée.
